## Europäisches Patentamt

(19) **European Patent Office**

**Office européen des brevets**

(11) Publication number: **0 118 288**
**B1**

(12) **EUROPEAN PATENT SPECIFICATION**

(45) Date of publication of patent specification: **26.07.89**

(51) Int. Cl.⁴: **C 03 B 9/38, C 03 B 11/12**

(21) Application number: **84301365.7**

(22) Date of filing: **02.03.84**

(54) Manufacture of moulded articles of glassware.

(30) Priority: **05.03.83 GB 8306145**

(43) Date of publication of application:
**12.09.84 Bulletin 84/37**

(45) Publication of the grant of the patent:
**26.07.89 Bulletin 89/30**

(84) Designated Contracting States:
**AT BE CH DE FR GB IT LI NL SE**

(56) References cited:
**BE-A- 881 161**
**FR-A-1 320 185**
**FR-A-2 321 376**

(73) Proprietor: **EMHART INDUSTRIES, INC.**
**426 Colt Highway**
**Farmington Connecticut 06032 (US)**

(72) Inventor: **Jones, Stanley Peter**
**Strafford House Bride Church Lane**
**Tickhill Nr. Doncaster (GB)**

(74) Representative: **Randall, John Walter et al**
**Emhart Patents Department Lyn House 39 The
Parade
Oadby, Leicester LE2 5BB (GB)**

Courier Press, Leamington Spa, England.

## Description

This invention is concerned with methods of manufacturing moulded articles of glassware and with mould portions for use in such manufacture.

The manufacture of moulded articles of glassware frequently involves a necessity to cool the mould used either during a moulding operation or between successive moulding operations. For example, in the manufacture of glassware by a glassware forming machine of the individual section type, gobs of molten glass are delivered successively to moulds in which the gobs are formed into parisons and subsequently to further moulds in which the parisons are formed into finished articles. The moulds of a machine of the individual section type absorb heat from the glass at a rate which is faster than the heat can be dissipated without the provision of cooling means for the moulds. Where it is necessary to provide such cooling around a mould cavity of the mould, it is known to provide a plurality of cylindrical cooling passages in the mould distributed around the mould cavity and to pass cooling fluid through these passages so that the cooling fluid absorbs heat from the mould and carries it away. The cooling effect can be varied around the mould cavity by controlling the supply of cooling fluid to each passage independently. U.K. Patent Specification No. 1533622 describes such an arrangement. In such cooling arrangements, the cooling effect achieved is influenced by the velocity of the air, its degree of turbulence and the temperature difference between the air and the wall of the passage. The cooling effect, therefore, is greatest in an entrance portion of the passage where the turbulence and temperature difference are greatest and progressively decreases along the length of the passage. This progressive decrease in cooling effect is disadvantageous in cases where the maximum cooling effect should ideally be in the central portion of the cooling passage. For example, where a bottle-shaped article is being moulded, the mould comprises an end portion into which the mould cavity does not extend and which does not require much cooling, a central portion in which most of the mould cavity is formed and which requires the most cooling as it contains the most molten material, and an opposite end portion in which a neck portion of the mould cavity is formed and which requires less cooling than the central portion because it contains less molten material. The cooling passages extend through the end portions as well as through the central portion so that, in order to achieve sufficient cooling in the central portion, at least one of the end portions has to be cooled more than is desirable because the concentration of the cooling effect at the entrance. Attempts have been made to concentrate the cooling effect where desired by inserting a tube made of insulating material into an entrance portion of each cooling passage to reduce the cooling effect in the entrance portion and therefore increase it in other portions of the passage. The above mentioned U.K. Patent Specification No. 1533622 describes the use of such insulating tubes. This, however, is only a partial solution to the problem which is also inconvenient as the tubes must be secured in position. Furthermore, the presence of the insulating tubes, reduces the available area for fluid flow and thereby increases the resistance to flow along the passage.

It is an object of the present invention to provide a method of manufacturing moulded articles in which the mould is cooled by cooling fluid flowing along a cooling passage in the mould and the cooling effect is concentrated without the use of an insulating tube.

The invention provides a method of cooling a mould in the manufacture of moulded articles of glassware, comprising providing the mould with a plurality of cooling passages formed therein so that they extend longitudinally of the mould and are distributed around a cavity of the mould in which the glass is moulded, each passage having an entrance portion, a central portion and an exit portion, each portion being of circular cross-section throughout and coaxial with the other portions of the passage, and passing cooling air along the passages so that the cooling air flows from the entrance portion of each passage into the central portion thereof and thence into the exit portion thereof, characterised in that the cooling effect in the exit portion is decreased and the cooling effect in the central portion is increased when cooling air is passed along the passages by providing the exit portion of each passage with a greater cross-sectional area throughout than the central portion of that passage.

Preferably, in order to further concentrate the cooling effect, the entrance portion also has a greater cross-sectional area throughout than the central portion.

Where the mould defines a generally bottle-shaped cavity in which the molten glass is shaped and the cooling passage extend generally parallel to a central longitudinal axis of the cavity, the central portions of the cooling passage may be arranged to extend opposite a generally cylindrical central portion of the cavity and the entrance and exit portions to each extend opposite an end portion of the cavity, one end portion being a base portion arranged to shape a base portion of a bottle and the other end portion being a neck portion arranged to shape a neck portion of a bottle.

The invention also provides a mould portion for use in manufacturing articles of glassware, the mould portion being arranged to cooperate with one or more further mould portions in defining a mould cavity in which molten glass can be shaped, the mould portion having a plurality of cooling passages extending longitudinally therein, the cooling passages being distributed around the mould cavity, characterised in that each cooling passage comprises an entrance portion, a central portion and an exit portion, each portion being of circular cross-section throughout and co-axial with the other portions so that cooling air can flow from the entrance portion into the central portion and from thence into the exit portion, the exit portion having a greater cross-sectional area throughout than the central portion, wherein the passages extend generally parallel to a central longitudinal axis of the cavity and the exit portions extend in an end portion of the mould portion in which a reduced requirement for cooling exists in comparison with the cooling requirement in a central portion of the mould portion in which the central portions of the passages extend.

In a mould portion according to the last preceding paragraph, the exit portion of each cooling passage may be of substantially uniform cross-sectional area throughout or it may increase throughout in cross-sectional area away from the central portion. The increase in cross-sectional area of the exit portion concentrates the cooling effect in the remainder of the mould. The cooling effect can be further concentrated in the central portion of the cooling passage if the entrance portion of each cooling passage is of greater cross-sectional area throughout than those of the central portion. The entrance portion may be of uniform cross-sectional area or increase throughout in cross-sectional area away from the central portion.

Where the mould portion defines a portion of a generally bottle-shaped cavity in which the molten glass is shaped and the cooling passages extend generally parallel to a central longitudinal axis of the cavity, the central portions of the cooling passages may extend opposite a generally cylindrical central portion of the cavity and the entrance and exit portions each extend opposite an end portion of the cavity, one end portion being a base portion arranged to mould a base portion of a bottle and the other end portion being a neck portion arranged to mould a neck portion of a bottle.

There now follows a detailed description, to be read with reference to the accompanying drawings, of a method of manufacturing moulded articles and two alternative mould portions for use in manufacturing articles of glassware which are illustrative of the invention. It is to be understood that the illustrative method and the illustrative mould portions have been selected for description by way of example and not of limitation of the invention.

In the drawings:

Figure 1 is a cross-sectional view of a cooling passage of the first illustrative mould portion;

Figure 2 is a graph showing the heat extraction along the cooling passage shown in Figure 1;

Figure 3 is a cross-sectional view of a cooling passage of the second illustrative mould portion;

Figure 4 is a graph of the heat extraction along the cooling passage of Figure 3; and

Figure 5 is a longitudinal cross-sectional view of the second illustrative mould portion.

In the illustrative method and moulds, glass is shaped in a mould and the mould is cooled by cooling fluid, for example air, flowing along a cooling passage formed in the mould. Although only one cooling passage is illustrated, it is to be understood that there may be a plurality of similar cooling passages distributed around a mould cavity. Either the first illustrative mould portion or the second illustrative mould portion can be used in the illustrative method but in either case the cooling passage comprises a central portion 10 of substantially uniform cross-sectional area and circular cross-section. The central portion 10 connects an entrance portion 14 of the cooling passage to an exit portion 12 thereof so that cooling fluid can flow, in the direction indicated by the arrow A, from the entrance portion 14 into the central portion 10 and from thence into the exit portion 12. The exit portion 12 is of substantially uniform cross-sectional area and circular cross-section and has a greater cross-sectional area than the central portion 10.

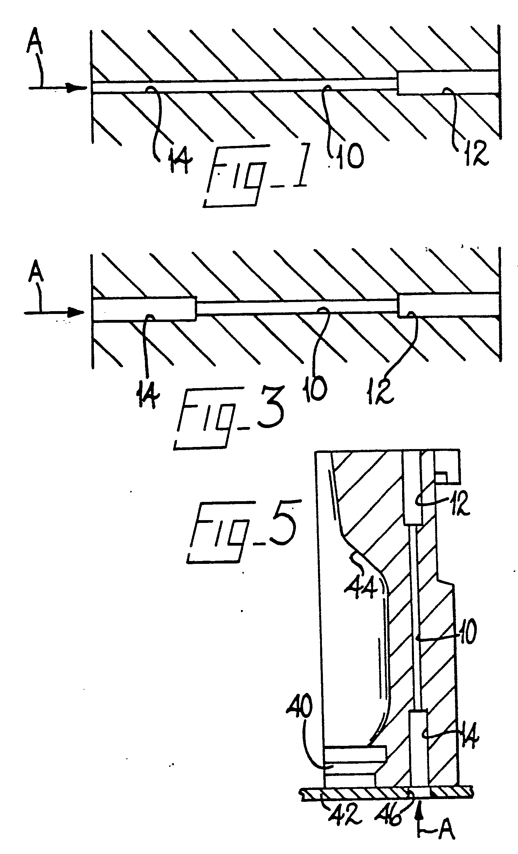

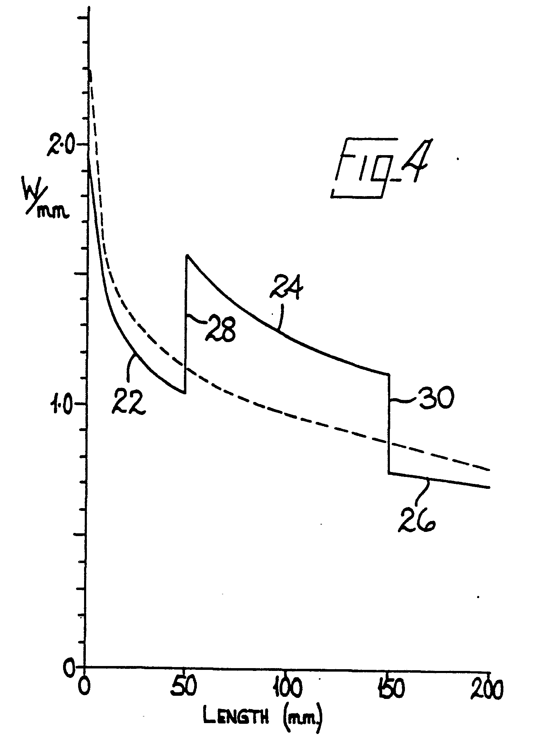

The cooling effect achieved in the illustrative method is different depending on whether the first illustrative mould portion shown in Figure 1 or the second illustrative mould portion shown in Figures 3 and 5 is used. This is because, while both the first and the second illustrative mould portions have cooling passages which have an entrance portion 14 arranged so that the cooling fluid can flow from the entrance portion 14 into the central portion 10, in the case of the first illustrative mould portion the entrance portion 14 is of circular cross-section and of substantially the same cross-sectional area as the central portion 10, however, in the case of the second illustrative mould portion, the entrance portion 14 is of substantially uniform cross-sectional area but is of greater cross-sectional area than the central portion 10. Thus, both the first and the second illustrative mould portions have at least one cooling passage extending longitudinally therein so that the cooling fluid can flow through the cooling passage and cool the mould portion. In both cases, the cooling passage comprises a central portion 10 extending through a central region of the mould portion, the central portion 10 being of substantially uniform cross-sectional area, and an exit portion 12 extending through an end region of the mould portion, the exit portion 12 being arranged so that cooling fluid can flow from the central portion 10 into the exit portions 12 and the exit portion 12 being of substantially uniform cross-sectional area and having a greater cross-sectional area than the central portion 10. However, while the first illustrative mould portion has a cooling passage having an entrance portion 14 which is of the same cross-sectional area as the central portion 10, the entrance portion 14 of the second illustrative mould portion is of greater cross-sectional area than the central portion 10 thereof.

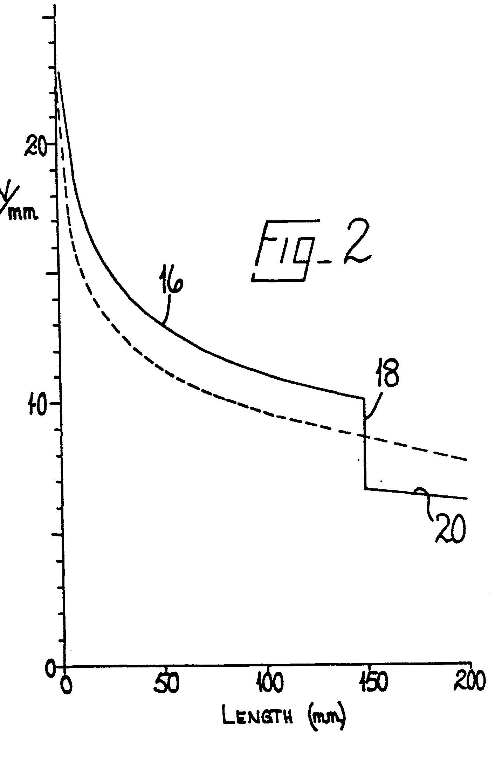

Figure 2 shows the cooling effect achieved in the illustrative method using the first illustrative mould portion. It is a graph representing the heat extraction in watts per millimetre plotted against the length of the cooling passage in millimetres beginning at the entrance portion 14. Although the flow of cooling fluid (indicated by the arrow A) along the cooling passage is uniform, the amount of heat extraction reduces as the air moves along the passage as the air becomes hotter and therefore the temperature differential between the air and the walls of the cooling passage reduces. Thus, the graph of Figure 2 illustrates that the heat extraction reduces away from the entrance portion 14 along the curve 16. At the junction between the central portion 10 and the exit portion 12, there is a very rapid reduction in the heat extracted per millimetre as shown by the portion 18 of the graph of Figure 2 and in the exit portion 12 the extraction is shown by the almost flat curve 20. The broken line in Figure 2 represents the heat extracted per millimetre for a cooling passage of uniform cross-sectional area throughout, the cross-sectional area being equal to that of the central portion 10. By comparing the broken line with the solid line 16, 18, 20 it will be seen that the cooling passage of the first illustrative mould portion achieves an enhanced cooling effect in the central portion 10 and in the entrance portion 14 but a reduced cooling effect in the exit portion 20.

Figure 4 shows the graph of the heat extraction in watts per millimetre against the length of the cooling passage of the second illustrative mould portion. The second illustrative mould portion is arranged to co-operate with a bottom plate 40 (Figure 5), resting on a support plate 42, and with a further mould portion (not shown) to define a mould cavity 44. The cooling passage 14, 10, 12 extends longitudinally of the mould portion and the cavity 44 receiving fluid through a hole 46 in the support plate 42 in the direction of the arrow A. The portion 22 of the graph shows the cooling effect in the entrance portion 14, the portion 24 shows the cooling effect in the central portion 10, and the portion 26 shows the cooling effect in the exit portion 12. The portions 28 and 30 show respectively the rapid changes of cooling effect which occur at the junctions between the entrance portion 14 and the central portion 10 and the central portion 10 and the exit portion 12. The broken line in Figure 4 shows the graph for a uniform cooling passage having the same cross-sectional area as the central portion 10. From a comparison of the broken and solid lines in Figure 4, it will be seen that the cooling effect is reduced in the entrance portion 14 from that which would be achieved in a uniform cooling passage while the cooling effect in the central portion is increased. The cooling effect in the exit portion is also reduced.

In the illustrative method using either the first illustrative mould portion or the second illustrative mould portion, the cooling effect of the flowing cooling fluid is cncentrated in a central portion of the cooling passage without the use of insulating materials.

Figure 5 illustrates that the mould may define a generally bottle-shaped cavity 44 a portion of which is defined by either the first or the second illustrative mould portion. The cooling passage 14, 10, 12 extends generally parallel to a central longitudinal axis of the cavity 44 with the central portion 10 extending opposite a generally cylindrical central portion of the cavity which shapes a central portion of a bottle. The entrance portion 14 and the exit portion 12 extend opposite respective end portions of the cavity 44. One end portion is a base portion arranged to co-operate with the base plate 40 in moulding a base portion of a bottle and the entrance portion 14 is opposite this end portion. The other end portion, opposite which is the exit portion 12 is arranged to mould a neck portion of a bottle.

## Claims

1. A method of cooling a mould in the manufacture of moulded articles of glassware, comprising providing the mould with a plurality of cooling passages formed therein so that they extend longitudinally of the mould and are distributed around a cavity of the mould in which the glass is moulded, each passage having an entrance portion (14), a central portion (10) and an exit portion (12), each portion being of circular cross-section throughout and coaxial with the other portions of the passage, and passing cooling air along the passages so that the cooling air flows from the entrance portion (14) of each passage into the central portion (10) thereof and thence into the exit portion (12) thereof, characterised in that the cooling effect in the exit portion (12) is decreased and the cooling effect in the central portion is increased when cooling air is passed along the passages by providing the exit portion of each passage with a greater cross-sectional area throughout than the central portion of that passage.

2. A method according to claim 1, characterised in that the entrance portion (14) of each passage is provided with a greater cross-sectional area throughout than the central portion of that passage.

3. A method according to either one of claims 1 and 2, characterised in that the passages are provided so that they extend generally parallel to a central longitudinal axis of a generally bottle-shaped cavity (44) of the mould, the central portions (10) of the passages being provided so that they extend opposite a generally cylindrical central portion of the cavity and the entrance (14) and exit (12) portions being provided so that they extend opposite end portions of the cavity (44), one end portion being a base portion arranged to shape a base portion of a bottle and the other end portion being a neck portion arranged to shape a neck portion of a bottle.

4. A mould portion for use in manufacturing articles of glassware, the mould portion being arranged to cooperate with one or more further mould portions in defining a mould cavity in which molten glass can be shaped, the mould portion having a plurality of cooling passages (10, 12, 14) extending longitudinally therein, the cooling passages being distributed around the mould cavity, characterised in that each cooling passage comprises an entrance portion (14), a central portion (10) and an exit portion (12), each portion being of circular cross-section throughout and co-axial with the other portions so that cooling air can flow from the entrance portion (14) into the central portion (10) and from thence into the exit portion (12), the exit portion (12) having a greater cross-sectional area throughout than the central portion (10), wherein the passages (10, 12, 14) extend generally parallel to a central longitudinal axis of the cavity and the exit portions (12) extend in an end portion of the mould portion in which a reduced requirement for cooling exists in comparison with the cooling requirement in a central portion of the mould portion in which the central portions (10) of the passages extend.

5. A mould portion according to claim 4, characterised in that the exit portion (12) of each cooling passage is of substantially uniform cross-sectional area throughout.

6. A mould portion according to claim 4, characterised in that the exit portion (12) of each cooling passage increases throughout in cross-sectional area away from the central portion (10).

7. A mould portion according to any one of claims 4 to 6, characterised in that the entrance portion (14) of each cooling passage is of greater cross-sectional area than the central portion (10).

8. A mould portion according to claim 7, characterised in that the entrance portion (14) of each cooling passage increases throughout in cross-sectional area away from the central portion (10).

9. A mould portion according to any one of claims 4 to 8, characterised in that the mould portion defines a portion of a generally bottle-shaped cavity (44) in which the molten glass can be shaped and the cooling passages (10, 12, 14) extend generally parallel to a central longitudinal axis of the cavity (44), the central portions (10) of the cooling passages extending through a central region of the mould portion opposite a generally cylindrical central portion of the cavity (44) and the entrance (14) and exit (12) portions each extending opposite an end portion of the cavity (44), one end portion being a base portion arranged to mould a base portion of a bottle and the other end portion being a neck portion arranged to mould a neck portion of a bottle.

**Patentansprüche**

1. Verfahren zum Kühlen einer Form beim Herstellen von Glasgegenständen, wobei die Form mit einer Vielzahl von Kühldurchgängen derart ausgebildet ist, daß sich letztere längs der Form erstrecken und um einen Hohlraum der Form verteilt sind, in welcher das Glas geformt wird, wobei jeder Durchgang einen Eingangsabschnitt (14), einen mittleren Abschnitt (10) und einen Ausgangsabschnitt (12) aufweist und jeder Abschnitt einen kreisförmigen Querschnitt aufweist und koaxial zu den anderen Abschnitten des Durchganges verläuft, wobei Kühlluft längs der Durchgänge derart geführt wird, daß die Kühlluft aus dem Eingangsabschnitt (14) eines jeden Durchganges in dessen Mittelabschnitt und danach in den Ausgangsabschnitt (12) strömt, dadurch gekennzeichnet, daß die Kühlwirkung in dem Ausgangsabschnitt (12) dadurch herabgesetzt und sie in dem Mittelabschnitt dadurch erhöht wird, wenn Kühlluft durch die Durchgänge strömt, daß der Ausgangsabschnitt eines jeden Durchganges mit einem größeren Querschnittsbereich als der Mittelabschnitt des Durchganges ausgebildet wird.

2. Verfahren nach Anspruch 1, dadurch gekennzeichnet, daß der Eingangsabschnitt (14) eines jeden Durchganges mit einem durchgehend größeren Querschnittsbereich als der Mittelabschnitt dieses Durchganges ausgebildet wird.

3. Verfahren nach einem der Ansprüche 1 bis 2, dadurch gekennzeichnet, daß die Durchgänge so ausgebildet sind, daß sie sich allgemein parallel zu einer mittleren Längsachse eines allgemein flaschenförmigen Hohlraumes (44) der Form erstrecken, daß die Mittelabschnitte (10) der durchgänge so ausgebildet werden, daß sie sich neben einem allgemein zylindrischen Mittelabschnitt des Hohlraumes erstrecken, und daß die Eingangsabschnitte (14) und Ausgangsabschnitte (12) der Durchgänge so ausgebildet werden, daß sie sich im Bereich von Endabschnitten des Formhohlraumes (44) erstrecken, wobei ein Endabschnitt ein Bodenabschnitt ist, der zum Ausbilden eines Bodenabschnittes einer Flasche dient und der andere Endabschnitt ein Halsabschnitt ist, in welchem ein Flaschenhals geformt wird.

4. Formabschnitt für die Verwendung beim Herstellen von Glasgegenständen, welcher mit einem oder mehreren weiteren Formabschnitten zusammenwirkt, so daß ein Formhohlraum definiert ist, in welchem geschmolzenes Glas geformt werden kann, wobei der Formabschnitt eine Vielzahl von Kühldurchgängen aufweist, die sich longitudinal im Formabschnitt erstrecken und um den Formhohlraum verteilt sind, dadurch gekennzeichnet, daß jeder Kühldurchgang einen Eingangsabschnitt (14), einen Mittelabschnitt (10) und einen Ausgangsabschnitt (12) aufweist, daß jeder Abschnitt durchgehend einen kreisförmigen Querschnitt aufweist und zu den anderen Abschnitten koaxial angeordnet ist, so daß Kühlluft aus dem Eingangsabschnitt (14) in den Mittelabschnitt (10) und anschließend in den Ausgangsabschnitt (12) strömen kann, daß der Ausgangs-abschnitt (12) einen größeren Querschnittsbe-reich als der Mittelabschnitt (10) aufweist, daß sich die Kühldurchgänge (10, 12, 14) allgemein parallel zu einer mittleren Längsachse des Hohlraumes und sich die Ausgangsabschnitte (12) in einen Endabschnitt des Formabschnittes erstrekken, in welchem im Vergleich mit dem Kühlbedarf in einem mittleren Abschnitt des Formabschnittes, in welchem sich die Mittelabschnitte (10) der Durchgänge erstrecken, ein geringerer Kühlbedarf besteht.

5. Formabschnitt nach Anspruch 4, dadurch gekennzeichnet, daß der Ausgangsabschnitt (12) eines jeden Kühldurchganges durchgehend einen gleichmäßigen Querschnitt aufweist.

6. Formabschnitt nach Anspruch 4, dadurch gekennzeichnet, daß der Ausgangsabschnitt (12) eines jeden Kühldurchganges sich vom Mittelabschnitt (10) weg in seinem Querschnittsbereich vergrößert.

7. Formabschnitt nach einem der Ansprüche 4 bis 6, dadurch gekennzeichnet, daß der Eingangsabschnitt (14) eines jeden Kühldurchganges einen größeren Querschnittsbereich als der Mittelabschnitt (10) aufweist.

8. Formabschnitt nach Anspruch 7, dadurch gekennzeichnet, daß der Eingangsabschnitt (14) eines jeden Kühldurchganges sich von dem Mittelabschnitt (10) weg in seinem Querschnittsbereich vergrößert.

9. Formabschnitt nach einem der Ansprüche 4 bis 8, dadurch gekennzeichnet, daß der Formabschnitt einen Abschnitt eines allgemein flaschenförmigen Hohlraumes (44) begrenzt, in welchem das geschmolzene Glas geformt werden kann, daß sich die Kühldurchgänge (10, 12, 14) allgemein parallel zu einer Längsmittelachse des Hohlraumes (44) erstrecken, daß sich die Mittelabschnitte (10) der Kühldurchgänge durch einen Mittelbereich des Formabschnittes neben einem allgemein zylindrischen Mittelabschnitt des Hohlraumes (44) erstrecken, daß sich jeder Eingangsabschnitt (14) und Ausgangsabschnitt (12) neben einem Endabschnitt des Hohlraumes (44) erstreckt, daß ein Endabschnitt ein Bodenabschnitt ist, welcher einen Bodenabschnitt einer Flasche formen kann, und daß der andere Endabschnitt ein Halsabschnitt ist, der so angeordnet ist, daß ein Halsabschnitt einer Flasche geformt werden kann.

**Revendications**

1. Procédé de refroidissement d'un moule pour la fabrication d'articles moulés en verre qui consiste à munir le moule d'une multitude de passages de refroidissement qui sont formés dans ce moule de telle manière qu'ils s'étendent selon la direction longitudinale du moule, et qui sont répartis autour d'une cavité du moule dans laquelle le verre est moulé, chaque passage possédant une Portion d'entrée (14), une portion centrale (10) et une portion de sortie (12), chaque portion étant de section circulaire sur toute sa longueur et coaxiale aux autres portions du passage, et à faire passer de l'air de refroidissement dans ces passages de telle manière que l'air de refroidissement s'y écoule de la portion d'entrée (14) à la portion centrale (10) et, de là, à sa portion de sortie (12), caractérisé en ce que l'effet de refroidissement obtenu dans la portion de sortie (12) est diminué et l'effet de refroidissement obtenu dans la portion centrale est augmenté lorsqu'on fait circuler de l'air de refroidissement dans ces passages grâce au fait qu'on munit la portion de sortie de chaque passage d'une section d'aire plus grande, que celle de la portion centrale de ce passage, sur toute sa longueur.

2. Procédé selon la revendication 1, caractérisé en ce que la portion d'entrée (14) de chaque passage présente sur toute sa longueur une plus grande aire de section que la portion centrale de ce passage.

3. Procédé selon une quelconque des revendications 1 et 2, caractérisé en ce que les passages sont ménagés de manière qu'ils s'étendent à peu près parallèlement à l'axe longitudinal central de la cavité (44) du moule qui présente la forme générale d'une bouteille, les portions centrales (10) des passages étant telles qu'elles s'étendent au droit d'une portion centrale de forme cylindrique de la cavité et les portions d'entrée (14) et de sortie (12) étant telles qu'elles s'étendent en face de portions d'extrémités de la cavité (44), une portion d'extrémité étant une portion de base agencée pour mouler le fond d'une bouteille et l'autre portion d'extrémité étant une portion rétrécie agencée pour mouler le col d'une bouteille.

4. Portion de moule destiné à être utilisé pour la fabrication d'articles en verre, la portion de moule étant agencée pour coopérer avec une ou plusieurs autres portions de moule pour définir une cavité de moule dans laquelle du verre en fusion peut être moulé, la portion de moule présentant une multitude de passages de refroidissement (10, 12, 14) qui s'étendent selon sa longueur, et sont répartis sur le pourtour de la cavité du moule, caractérisé en ce que chaque passage de refroidissement comprend une portion d'entrée (14), une portion centrale (10) et une portion de sortie (12), chaque portion étant de section circulaire sur toute sa longueur et étant coaxiale aux autres portions, de manière que l'air de refroidissement puisse s'y écouler de la portion d'entrée (14) à la portion centrale (10) et, de là, à la portion de sortie (12), la portion de sortie (12) ayant sur toute sa longueur une section d'aire supérieure à celle de la portion centrale (10), dans laquelle les passages (10, 12, 14) s'étendent généralement parallèlement à un axe longitudinal central de la cavité et les portions de sortie (12) s'étendent dans une portion d'extrémité de la portion de moule dans laquelle existe un plus petit besoin de refroidissement, comparativement à celui de la portion centrale de la portion du moule où s'étendent les portions centrales (10) des passages.

5. Portion de moule selon la revendication 4, caractérisé en ce que la portion de sortie (12) de chaque passage de refroidissement est d'une aire de section pratiquement uniforme sur toute sa longueur.

6. Portion de moule selon la revendication 4, caractérisé en ce que la portion de sortie (12) de chaque passage de refroidissement a une aire de section croissante sur toute sa longueur lorsqu'on s'éloigne de la portion centrale (10).

7. Portion de moule selon une quelconque des revendications 4 à 6, caractérisé en ce que la portion d'entrée (14) de chaque passage de refroidissement est d'une plus grande aire de section que la portion centrale (10).

8. Portion de moule selon la revendication 7, caractérisée en ce que la portion d'entrée (14) de chaque passage de refroidissement présente une aire de section croissante sur toute sa longueur lorsqu'on s'éloigne de la portion centrale (10).

9. Portion de moule selon une quelconque des revendications 4 à 8, caractérisée en ce que la portion de moule définit une portion d'une cavité (44) présentant la forme générale d'une bouteille, dans laquelle du verre en fusion est moulé, les passages de refroidissement (10, 12, 14) s'étendent à peu près parallèlement à un axe longitudinal central de la cavité (44), des portions centrales (10) des passages de refroidissement s'étendant en face d'une portion centrale (44) de forme générale cylindrique de la cavité et les portions d'entrée (14) et de sortie (12) s'étendent chacune en face d'une portion d'extrémité de la cavité (44), une portion d'extrémité étant une portion de base agencée pour mouler le fond d'une bouteille et l'autre portion d'extrémité étant une portion rétrécie agencée pour mouler le col d'une bouteille.

A

*Fig_1*

14     10     12

A

*Fig_3*

14     10     12

*Fig_5*

12

44

10

40

14

42   46   A

Fig_2

Fig_4